# FASCICULE DE BREVET EUROPEEN

(11) **EP 0 642 974 B1**
(45) Date de publication et mention de la délivrance du brevet: **13.11.1996**
(21) Numéro de dépôt: 94402036.1
(22) Date de dépôt: 13.09.1994
(51) Int. Cl.: B64D 7/00, F42B 5/15

(54) **Equipement embarqué de tir de cartouches**
Bordseitige Abschussausrüstungen für Patronen
On-board launching equipment for cartridges

(30) Priorité: 14.09.1993 FR 9310928
(43) Date de publication de la demande: 15.03.1995
(73) Titulaire: MATRA DEFENSE, F-75116 Paris (FR)
(72) Inventeur: Juban, Jérome, F-78000 Versailles (FR); Tournois, Alain, F-78430 Les Essarts le Roi (FR)
(74) Mandataire: Fort, Jacques

(56) Documents cités:
- EP-A- 0 148 683

## Description

La présente invention concerne les équipements embarqués de tir de cartouches et elle est notamment utilisable dans les équipements destinés à être montés sur des aéronefs pour tirer des cartouches de leurres.

Les cartouches de leurres ont des constitutions et des dimensions qui varient considérablement, notamment en fonction de la mission et en fonction des dispositifs de détection et de poursuite à craindre. Afin que le montage des cartouches appropriées à bord d'un aéronef soit simple et rapide, on a déjà proposé un équipement embarqué conforme au préambule de la revendication 1 (EP-A-0 148 683).

Les équipements connus du type ci-dessus ont des moyens de verrouillage qui exigent de disposer d'un outillage pour fixer la barre transversale de l'étrier et pour la détacher. Il s'agit là d'un inconvénient qui peut être grave, car la mise en place, l'enlèvement ou le remplacement d'un chargeur se fait souvent sur le terrain.

L'invention vise notamment à fournir un équipement ayant des moyens de verrouillage armables et désarmables sans outillage.

Dans ce but, l'invention propose notamment un équipement suivant la partie caractérisante de la revendication 1.

En général, un verrou unique sera placé sur la barre transversale pour des raisons d'encombrement et de symétrie. Cependant il est possible de prévoir, pour plus de sécurité, deux verrous. Dans ce cas, ils peuvent être portés par les branches latérales de l'étrier.

La butée appartenant au lance-cartouches peut par exemple être constituée par un épaulement d'une tige parallèle à la direction d'insertion. Le pêne du verrou peut être monté coulissant sur une pièce tournant autour de l'axe et être repoussé vers une position en saillie prédéterminée par un ressort interposé entre lui et la pièce qui comporte alors une fourchette destinée à encadrer la tige.

Suivant le véhicule porteur, le boîtier lance-cartouches est orienté vers le bas ou vers le haut. S'il s'ouvre vers le bas, le chargeur s'extrait de lui-même par gravité. Sa mise en place peut alors être facilitée en le munissant de un ou plusieurs pions en saillie vers le boîtier lance-cartouches, destinés à être retenus sur le fond du boîtier lance-cartouches par un ou des cliquets équipant ce dernier jusqu'à maintien définitif par verrouillage. Toujours dans le but d'éviter la nécessité d'un outillage pour le démontage, le cliquet ou chaque cliquet peut être prolongé jusqu'au droit d'une paroi latérale du boîtier de façon à être dégageable par action manuelle sur une tige faisant saillie hors du boîtier.

Lorsqu'au contraire le boîtier lance-cartouches s'ouvre vers le haut, aucun dispositif de retenue auxiliaire comparable à des cliquets n'est nécessaire. En revanche, l'extraction du chargeur est compliquée. Par la faciliter, l'étrier peut comporter, au-delà de l'axe, des prolongements destinés à venir s'engager sous des saillies du chargeur qui servent également au maintien et à soulever le chargeur lorsqu'on fait tourner l'étrier, à partir de la position de maintien, au-delà d'une orientation déterminée.

D'autres caractéristiques secondaires sont données dans les sous-revendications.

L'invention sera mieux comprise à la lecture de la description qui suit de modes particuliers de réalisation de l'invention, donnés à titre d'exemples non limitatifs. La description se réfère aux dessins qui l'accompagnent, dans lesquels :
- la figure 1 est une vue schématique en perspective, destinée à montrer les composants concernés par l'invention d'un équipement de tir de cartouches ;
- la figure 2 est une vue schématique en coupe transversale destinée à montrer la disposition relative de l'étrier et de la butée lorsque l'étrier est verrouillé et maintient le chargeur ;
- la figure 3 montre, à grande échelle, les moyens de verrouillage de l'équipement dans l'état qu'ils occupent lorsqu'ils sont en prise, vus dans la direction de la flèche F sur la figure 1 ;
- la figure 4 est une vue de dessus de la figure 3 ;
- la figure 5 est une vue schématique montrant une constitution possible de moyens auxiliaires de retenue du chargeur, utilisables lorsque le boîtier lance-cartouches s'ouvre vers le bas ;
- la figure 6 montre schématiquement, en vue de côté, un équipement dont le boîtier lance-cartouches s'ouvre vers le haut et dont l'étrier est prévu pour faciliter l'extraction du chargeur ;
- la figure 7, similaire à la figure 6, montre le déplacement de l'étrier pour extraire le chargeur.

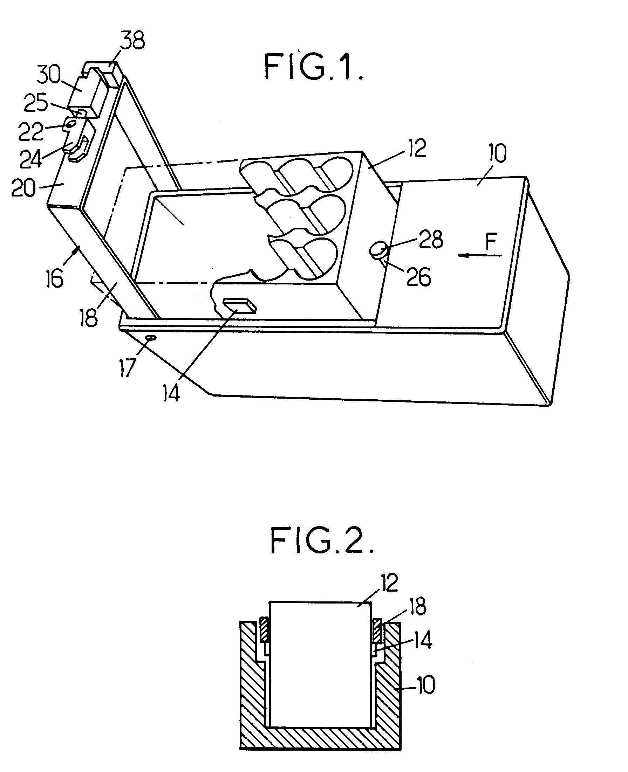

L'équipement, dont les constituants principaux sont montrés en figure 1, peut être regardé comme ayant un boîtier lance-cartouches 10, destiné à être fixé à demeure sur un véhicule, un module chargeur 12 représenté partiellement inséré et des moyens de verrouillage. Le boîtier et le lance-cartouches ont une constitution générale connue. Dans le chargeur 12 sont ménagés des alvéoles parallèles de réception de cartouches (non représentées), munies chacune d'un allumeur. Le fond du boîtier lance-cartouches 10 comprend des organes d'allumage et l'une des parois longitudinales du boîtier, plus épaisse que l'autre, contient des circuits électriques et électroniques de mise à feu dont la constitution peut être celle décrite dans le document EP-A-0 442 822.

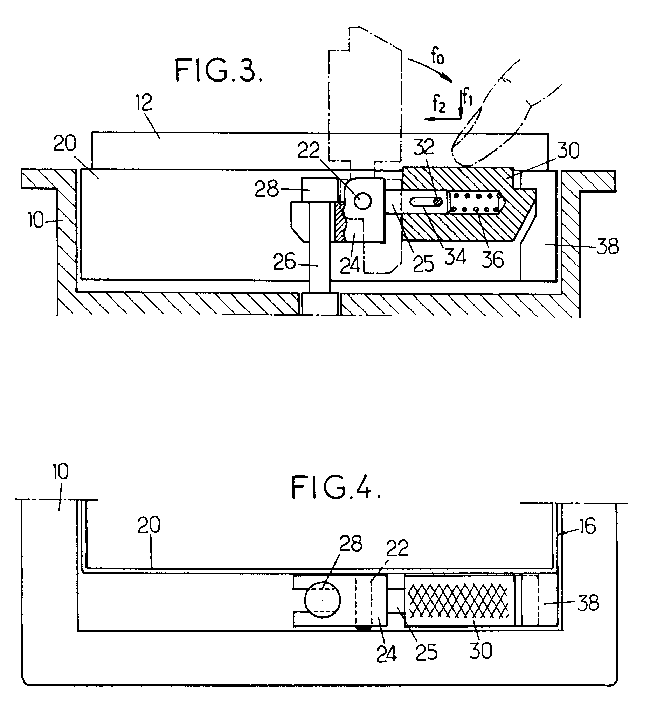

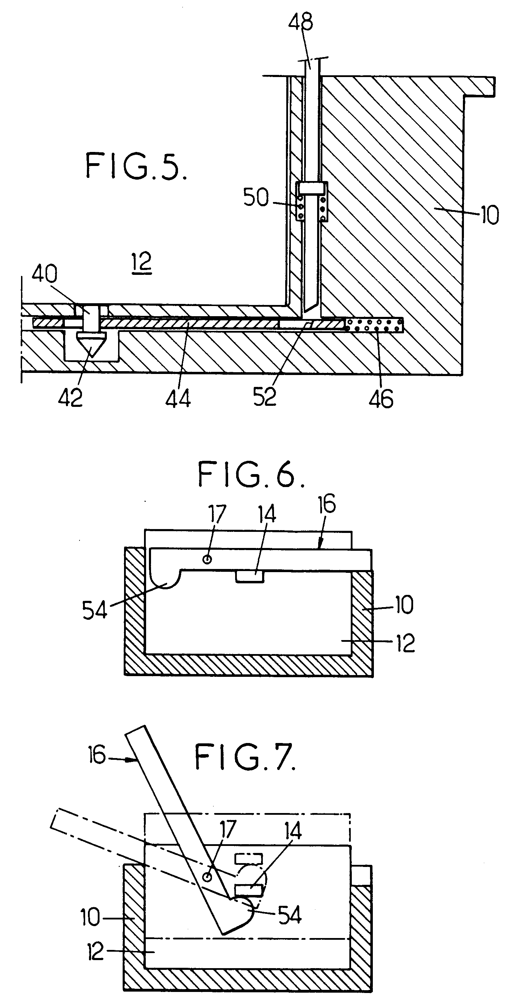

Les moyens de maintien du chargeur 12 dans la position où il est pleinement enfoncé dans le boîtier 10 comportent, sur le chargeur, des saillies 14. Ils comportent de plus un étrier 16 dont les branches latérales 18 sont montées sur le boîtier par l'intermédiaire de pivots 17 permettant à l'étrier de basculer autour d'un axe orthogonal à la direction d'insertion du chargeur et qui, dans le mode de réalisation illustré, est perpendiculaire à la longueur du chargeur. Les bras latéraux 18 sont prévus pour prendre appui sur les saillies 14 qui peuvent être de simples bossages ou, pour éviter le glissement des branches latérales 18, être constituées par des crochets. La barre transversale 20 de l'étrier est munie de moyens de verrouillage sur le boîtier 10. Ces moyens comprennent, dans le mode de réalisation illustré sur les figures 1, 3 et 4, un verrou monté sur la barre 20 de l'étrier 16 de façon à pouvoir tourner autour d'un axe 22 perpendiculaire à l'axe 17 et perpendiculaire à la direction d'insertion du chargeur 12 lorsque les bras latéraux maintiennent le chargeur. Ce verrou se compose d'une pièce 24 présentant, d'un côte de l'axe 22, une fourchette et, de l'autre côté de l'axe, un guide cylindrique 25. La fourchette est destinée à s'engager autour d'une tige 26 et à venir s'appuyer sur une butée constituée par l'épaulement limitant un renflement terminal 28 de la tige. La tige 26 est fixée de façon permanente au boîtier lance-cartouches et orientée dans la direction d'insertion du chargeur. Le verrou comprend encore un pêne 30 capable de coulisser sur le guide cylindrique 25, qui peut avoir avoir une section à pans coupés pour éviter la rotation du pêne. Le déplacement du pêne 30 sur le guide est limité par des moyens appropriés de constitution quelconque, tels qu'une goupille 32 traversant le pêne et traversant un trou ovalisé 34 ménagé dans le guide. Un ressort 36, emprisonné entre le pêne et le guide, tend à repousser le pêne vers la position dans laquelle il est représenté en figures 3 et 4.

Les moyens de verrouillage comprennent encore une gâche 38 en saillie à partir de la barre transversale 20 de l'étrier, destinée à recevoir le pêne 30 qui présente un bord d'attaque oblique de façon à s'engager dans la gâche par simple pression. La tige 26, le verrou et la gâche 38 ont une disposition relative telle que l'étrier retienne le chargeur contre le fond du boîtier lance-cartouches lorsque le pêne est engagé dans la gâche.

Le mode de mise en place et d'enlèvement du chargeur ressort de la description qui précède et en conséquence ne sera que sommairement décrit.

Pour mettre en place le chargeur, l'étrier 16 est basculé, au-delà de la position où il est montré en figure 1, de façon à libérer un trajet d'introduction. Le chargeur 12 est inséré. Puis on rabat l'étrier 16 sur le boîtier, en maintenant le verrou dans la position où il est montré en traits mixtes sur la figure 3. Une fois l'étrier en place, le verrou est basculé comme indiqué par la flèche f₀ sur la figure 3. Le pêne s'encliquète alors dans la gâche et simultanément, la fourchette prend appui sur le renflement 28.

Pour enlever le chargeur 12, le verrou doit être dégagé. Pour cela, on appuie sur le pêne (flèche f₁) et on le fait glisser vers l'arrière avec le doigt (flèche f₂). On peut alors faire basculer l'étrier vers l'arrière et enlever le chargeur.

Lorsque le boîtier s'ouvre vers le bas, il faudrait supporter le chargeur en même temps qu'on rabat et qu'on verrouille l'étrier lors du chargement. Pour faciliter le chargement, des moyens de retenue auxiliaires, qui n'ont pas à avoir la robustesse qui serait requise pour un accrochage permanent, peuvent être prévus.

Dans le cas illustré sur la figure 5, un pion d'accrochage 40 est fixé au fond du chargeur 12. Ce pion présente une tête conique 42 terminée par un épaulement dirigé vers l'arrière. Une plaque 44 de verrouillage est montée dans un passage, ménagé dans le fond du boîtier 10, de façon à pouvoir glisser entre la position de verrouillage du pion où elle est montrée en figure 5 et vers laquelle elle est repoussée par un ressort 46 et une position arrière de libération du pion. Une tige 48, montée coulissante dans un alésage orthogonal au passage contenant la plaque 44, est repoussée par un ressort 50 vers une position où elle est en saillie hors du boîtier. Dans cette position, elle n'exerce aucune action sur la plaque 44. En revanche, lorsqu'elle est enfoncée à la main, sa partie terminale en biseau vient s'appuyer contre la paroi d'une ouverture 52 ménagée dans la plaque 44 et refoule cette dernière vers l'arrière, en libérant le pion 40.

Grâce à ces moyens auxiliaires, il est possible d'insérer le chargeur jusqu'à ce que son pion 40 le retienne. Puis le chargeur peut être lâché de sorte que l'opérateur dispose de ses deux mains pour rabattre et verrouiller l'étrier 16.

Lorsque le boîtier s'ouvre vers le haut, l'insertion du chargeur est facile mais, en revanche, son extraction est compliquée. Pour faciliter l'extraction, on peut donner à l'étrier 16 la constitution montrée schématiquement en figures 6 et 7, où les organes correspondant à ceux déjà représentés sont désignés par le même numéro de référence. L'étrier 16 de la figure 6 tourne autour d'un axe 17 qui n'est plus situé à son extrémité, mais en un point intermédiaire. Chaque branche latérale de l'étrier comporte de plus un talon 54 destiné à venir s'appuyer sur la butée correspondante 14, comme indiqué schématiquement sur la figure 7. La dimension du talon 54 est choisie de façon que le basculement complet de l'étrier soulève suffisamment le chargeur 12 pour qu'il puisse aisément être saisi et extrait.

On voit qu'aussi bien les moyens de verrouillage auxiliaires de la figure 5 que les moyens facilitant l'extraction du chargeur des figures 6 et 7 n'exigent pour leur mise en oeuvre aucun outillage.

## Revendications

1. Equipement embarqué de tir de cartouche, comprenant un boîtier lance-cartouches (10) destiné à être fixé à demeure sur un aéronef, contenant des circuits de mise à feu, et un chargeur (12) amovible et remplaçable, ménageant des alvéoles de réception de cartouches, ainsi qu'un dispositif de retenue du chargeur dans le boîtier lance-cartouches, comportant un étrier en U (16) ayant deux branches latérales (18) montées sur le boîtier (10) de façon à pouvoir tourner autour d'un axe (17) entre une position où l'étrier retient le chargeur (12) en place et une position où il le libère, muni de moyens de verrouillage sur le boîtier,
caractérisé en ce que les moyens de verrouillage comprennent au moins un verrou (24,30) monté sur l'étrier de façon à pouvoir basculer autour d'un axe (22) orthogonal dans la position de rétention à la direction d'insertion du chargeur dans le boîtier et comportant, d'un côté de l'axe, une fourchette destinée à s'engager sous une butée (28) appartenant au boîtier lance-cartouches et, de l'autre côté de l'axe, un pêne (30) destiné à s'encliqueter dans une gâche (38) prévue sur l'étrier et reculable manuellement pour le dégager de la gâche.

2. Equipement selon la revendication 1, caractérisé en ce qu'il comporte un seul verrou, placé sur la barre transversale (20) de l'étrier (16).

3. Equipement selon la revendication 1 ou 2, caractérisé en ce que la butée est constituée par un épaulement délimitant un renflement d'une tige (26) fixée au boîtier et parallèle à la direction d'insertion.

4. Equipement selon l'une quelconque des revendications précédentes, caractérisé en ce que le pêne (30) du verrou est monté coulissant sur une pièce (24) tournant autour de l'axe (22) du verrou et est repoussé vers une position en saillie prédéterminée par un ressort (36) interposé entre lui et la pièce.

5. Equipement selon la revendication 4, caractérisé en ce que la dite pièce (24) comporte la fourchette destinée à encadrer la tige (26) et à venir s'appuyer contre la butée (28).

6. Equipement selon l'une quelconque des revendications précédentes, caractérisé en ce que le chargeur (12) comporte au moins un pion (40) en saillie vers le boîtier lance-cartouches (10) et un cliquet (44) dans le fond du boîtier lance-cartouches, désarmable par action sur une tige (48) en saillie hors du boîtier.

7. Equipement selon l'une quelconque des revendications précédentes, caractérisé en ce que l'étrier (16) comporte, au-delà de l'axe (17) autour duquel il tourne, des prolongements (54) destinés à venir s'engager sous des saillies (14) du chargeur (12) pour soulever le chargeur.

## Claims

1. On-board launching equipment for cartridges, comprising a cartridge-launching casing (10) adapted to be permanently attached to an aircraft and containing firing circuits; a detachable and replaceable loader (12) which is formed with receptacles for cartridges; and a device which retains the loader in the cartridge-launching casing and comprises a U-shaped stirrup (16) having two side arms (18) so mounted on the casing (10) as to be rotatable around a pivot (17) between a position in which the stirrup retains the loader (12) in place and a position in which it releases the loader, the casing being provided with latching means, characterised in that the latching means comprise at least one latch (24, 30) which is so mounted on the stirrup as to be tiltable around a pivot (22) at right angles, in the retention position, to the direction in which the loader is inserted into the casing and which comprises on the pivot side a fork adapted to engage under a stop (28) associated with the cartridge-launching casing, and on the other side of the pivot a sliding bolt (30) which is adapted to latch into a keeper (38) provided on the stirrup and which can be withdrawn manually for its disengagement from the keeper.

2. Equipment according to Claim 1, characterised in that it comprises a single latch disposed on the cross-arm (20) of the stirrup (16).

3. Equipment according to Claims 1 or 2, characterised in that the stop is formed by a shoulder bounding a bulging portion of a rod (26) and parallel with the direction of insertion.

4. Equipment according to any of the preceding Claims, characterised in that the sliding bolt (30) of the latch is slidably mounted on a member (24) rotated around the pivot (22) of the latch and is repelled into a position of predetermined projection by a spring (36) interposed between the sliding bolt and said member.

5. Equipment according to Claim 4, characterised in that said member (24) comprises the fork adapted to enclose the rod (26) and to come into abutment with the stop (28).

6. Equipment according to any of the preceding Claims, characterised in that the loader (12) comprises at least one stud (40) projecting in the direction of the cartridge-launching casing (10) and a catch (44) in the bottom of the cartridge-launching casing which can be disarmed by taking action on a rod (48) projection out of the casing.

7. Equipment according to any of the preceding Claims, characterised in that the stirrup (16) comprises, beyond the pivot (17) around which it rotates, prolongations (54) adapted to engage under projections (14) of the loader (12) to lift the loader.

## Patentansprüche

1. Bordvorrichtung zum Abschießen Von Kartuschen, bestehend aus einem Kartuschenausstoßgehäuse (10), das dazu vorgesehen ist, fest in einem Luftfahrzeug installiert zu werden und Zündkreise aufweist, sowie aus einem abnehmbaren und austauschbaren Magazin (12), das Aufnahmezellen für Kartuschen bildet, sowie aus einer Haltevorrichtung für das Magazin in dem Kartuschenausstoßgehäuse, welche einen U-förmigen Bügel (16) mit zwei Seitenarmen (18) aufweist, die an dem Gehäuse (10) dergestalt montiert sind, daß sie um eine Achse (18) zwischen einer Position, in der der Bügel das Magazin (12) an seinem Platz festhält, und einer Position, in der er es freigibt, drehen können, mit Verriegelungsmitteln an dem Gehäuse,
**dadurch gekennzeichnet, daß** die Verriegelungsmittel aus mindestens einem Riegel (24, 30) bestehen, der an dem Bügel dergestalt montiert ist, daß er um eine Achse (22) drehen kann, die sich in Rückhaltestellung im rechten Winkel zu der Einsetzrichtung des Magazins in das Gehäuse befindet, und auf einer Seite der Achse eine Gabel aufweist, die dazu gedacht ist, unter einen zu dem Kartuschenausstoßgehäuse gehörenden Anschlag (28) einzugreifen, und auf der anderen Seite der Achse einen Schnapper (30) aufweist, der dazu gedacht ist, in eine Schließraste (38) einzuschnappen, die an dem Bügel vorgesehen ist und von Hand zurückgezogen werden kann, um ihn aus der Schließraste zu lösen.

2. Vorrichtung nach Anspruch 1,
**dadurch gekennzeichnet, daß** sie einen einzigen Riegel aufweist, der an der Querstange (20) des Bügels (16) angeordnet ist.

3. Vorrichtung nach Anspruch 1 oder 2,
**dadurch gekennzeichnet, daß** der Anschlag aus einem Absatz besteht, der eine Verdickung einer Stange (26) begrenzt, die an dem Gehäuse und parallel zur Einsetzrichtung befestigt ist.

4. Vorrichtung nach einem der vorherigen Ansprüche,
**dadurch gekennzeichnet, daß** der Schnapper (30) der Verriegelung gleitend an einem Teil (24) montiert ist, das um die Achse (22) der Verriegelung dreht, und von einer Feder (36), die zwischen ihm und dem Teil angeordnet ist, in eine vorbestimmte, hervorstehende Stellung zurückgeschoben wird.

5. Vorrichtung nach Anspruch 4,
**dadurch gekennzeichnet, daß** das genannte Teil (24) die Gabel aufweist, die dazu gedacht ist, die Stange (26) zu umfassen und in Anlage an dem Anschlag (28) zu kommen.

6. Vorrichtung nach einem der vorherigen Ansprüche,
**dadurch gekennzeichnet, daß** das Magazin (12) mindestens einen Zapfen (40), der in Richtung des Kartuschenausstoßgehäuses (10) hervorsteht, und eine Sperrklinke (44) im Boden des Kartuschenausstoßgehäuses, die durch Betätigung einer aus dem Gehäuse hervorstehenden Stange (48) entspannt werden kann, aufweist.

7. Vorrichtung nach einem der vorherigen Ansprüche,
**dadurch gekennzeichnet, daß** der Bügel (16) über die Achse (17) hinaus, um die er sich dreht, Verlängerungen (54) aufweist, die dazu bestimmt sind, unter Vorsprünge (14) des Magazins (12) einzugreifen, um das Magazin anzuheben.
